# EUROPÄISCHE PATENTSCHRIFT

(11) **EP 2 246 605 B1**
(45) Veröffentlichungstag und Bekanntmachung des Hinweises auf die Patenterteilung: **03.04.2013**
(21) Anmeldenummer: 09159240.2
(22) Anmeldetag: 30.04.2009
(51) Int. Cl.: F16L 33/22, F16L 37/091

(54) **Steckkupplung für Rohre Kupplungseinrichtung mit wenigstens zwei solchen Steckkupplungen**
Coupling for pipes and coupling device with at least two such couplings
Raccord enfichable pour tuyaux et dispositif d'embrayage doté d'au moins deux tels raccords enfichables

(43) Veröffentlichungstag der Anmeldung: 03.11.2010
(73) Patentinhaber: Fränkische Rohrwerke Gebr. Kirchner GmbH + Co KG, 97486 Königsberg/Bayern (DE)
(72) Erfinder: Welsch, Thomas, 97437 Hassfurt (DE)
(74) Vertreter: Herzog, Markus

(56) Entgegenhaltungen:
- WO-A-2006/135227
- WO-A-2008/098275
- DE-A1- 19 654 435
- DE-A1- 19 904 425
- DE-U1- 20 017 921
- FR-A- 2 712 063

## Beschreibung

### Beschreibung

Die Erfindung betrifft eine Steckkupplung für ein Rohr, umfassend einen Grundkörper mit einem Rohrstutzen, der zum Einführen in einen Endabschnitt des Rohrs bestimmt ist, und mit einer Ringschulter, welche an einem dem freien Ende des Rohrstutzens abgewandten Ende des Rohrstutzens vorgesehen ist und zur Anlage an einer Stirnfläche des Rohrs bestimmt ist, eine einstückig ausgebildete Hülse, die zumindest teilweise um den Grundkörper herum angeordnet ist und mit diesem einen Aufnahmeraum bildet, in welchen das Rohr einführbar ist, und wenigstens ein Halteelement, welches dazu bestimmt ist, mit einem in den Aufnahmeraum eingeführten Rohr von außen derart in Eingriff zu treten, dass es sich einer Bewegung des Rohrs aus dem Aufnahmeraum heraus widersetzt.

Derartige Steckkupplungen werden beispielsweise in der Haustechnik im Heizungs- und Sanitärbereich zum Kuppeln von Kalt- und Warmwasserleitungen oder auch zum Kuppeln von Druckluftleitungen oder dergleichen Leitungen eingesetzt. Sie eignen sich aber auch zum direkten Anschluss an einen Verteiler, beispielsweise einer Fußbodenheizung. Ziel ist es stets, die Verbindung einfach und schnell herzustellen. Die Steckkupplungen können als reine Steckverbinder ausgebildet sein. Es ist jedoch auch möglich, die Rohre nach dem Einstecken zusätzlich durch Verpressen zu befestigen.

Eine derartige Steckkupplung ist beispielsweise aus der CA 2 493 695 A1 bekannt. Bei dieser Steckkupplung ist die Hülse an ihrer Innenumfangsfläche mit einer konischen Fläche versehen, welche sich in einer Richtung, welche einer Bewegung des Rohrs aus dem Aufnahmeraum heraus entspricht, verjüngt. Mit dieser konischen Fläche wirkt eine konische Gegenfläche des Halteelements zusammen, so dass das Halteelement bei dem Versuch, das Rohr aus dem Aufnahmeraum herauszuziehen, in das Rohr hinein gedrückt wird und es somit sicher in der Steckkupplung hält.

Das Prinzip zusammenwirkender konischer Flächen ist auch aus einer ganzen Reihe weiterer Druckschriften bekannt. Lediglich beispielhaft sei verwiesen auf die WO 2006/135 227 A1, die DE 20 2005 004 522 U1 und die EP 1 150 056 A2, wobei bei der letztgenannten Druckschrift dieses Prinzip zum Halten des Rohrs von dessen Innenseite her angewendet wird.

Darüber hinaus ist es beispielsweise aus der DE 10 2004 007 745 B3 oder der DE 10 2004 032 134 A1 auch bekannt, Halteelemente, die das Rohr von dessen Außenseite her halten, zwischen den Komponenten einer zwei- oder mehrteiligen Hülse einzuklemmen.

Allen diesen Steckkupplungen ist der Nachteil gemeinsam, dass zum Halten des Rohrs von dessen Außenseite her eine große Anzahl von Elementen erforderlich ist.

Andere Steckkupplungen sind beispielsweise aus der DE 19904425 oder der DE 196 54435 auch bekannt.

Demgegenüber ist es Aufgabe der vorliegenden Erfindung, eine Steckkupplung der eingangs genannten Art bereitzustellen, welche zumindest hinsichtlich des Haltens des Rohrs von dessen Außenseite her einfacher aufgebaut ist.

Diese Aufgabe wird erfindungsgemäß durch eine Steckkupplung der eingangs genannten Art gelöst, bei welcher das wenigstens eine Halteelement mit der Hülse einstückig ausgebildet ist. Somit braucht erfindungsgemäß zum Halten des Rohrs von dessen Außenseite her lediglich ein einziges Element bereitgestellt zu werden. Dies reduziert die Herstellungskosten in mehrfacher Hinsicht. Zum einen müssen weniger Einzelteile hergestellt und auf Vorrat gehalten werden, und zum anderen wird die Montage der Steckkupplung zu einer betriebsbereiten Einheit erleichtert.

Um einen ausreichenden Halt des Rohrs in der Steckkupplung gewährleisten zu können, wird vorgeschlagen, dass über den Umfang der Steckkupplung eine Mehrzahl von Halteelementen verteilt angeordnet ist.

Dabei ist es im Hinblick auf die Vermeidung von Kippmomenten, welche bei dem Versuch, das Rohr aus der Steckkupplung herauszuziehen, auf das Rohr ausgeübt werden könnten, vorteilhaft, wenn wenigstens ein Teil der Mehrzahl von Halteelementen auf im Wesentlichen der gleichen axialen Höhe der Hülse angeordnet ist. Beispielsweise könnten die Halteelemente auf einer oder mehreren Ringlinien im Wesentlichen gleichmäßig verteilt angeordnet sein, wobei bei Anordnung auf mehreren Ringlinien die Halteelemente benachbarter Ringlinien in Achsrichtung der Hülse zueinander ausgerichtet oder gegeneinander versetzt angeordnet sein können.

In herstellungstechnisch einfacher Weise kann wenigstens ein Halteelement in dem es umgebenden Material der Hülse durch Materialverdrängung, beispielsweise durch Schneiden, Stanzen oder dergleichen, unter Belassung einer Materialverbindung lediglich an der Basis des Halteelements und durch Ausstellen nach radial innen gebildet sein. Dabei kann das Halteelement eine geringere Breite oder/und eine geringere Länge aufweisen als das durch die Materialverdrängung in der Hülse gebildete Fenster. In diesem Fall kann der ordnungsgemäße Eingriff der Halteelemente mit dem Rohr visuell überprüft werden.

Zur Sicherstellung eines zuverlässigen Eingriffs des wenigstens einen Halteelements in das Rohr ist es vorteilhaft, wenn wenigstens ein Halteelement in einem Hülsenabschnitt angeordnet ist, der einen größeren Abstand von der Hülsenachse, beispielsweise einen größeren Radius, aufweist als die an ihn umgebenden Hülsenabschnitte. Der größere Abstand ermöglicht es dabei, den Anstellwinkel des wenigstens einen Haltelements in geeigneter Weise zu wählen. Der Abstand der umgebenden Hülsenabschnitte von der Hülsenachse bzw. deren Radius kann in Anpassung an die Abmessungen des Rohrs gewählt werden.

Das vollständige Einschieben des Rohrs in die Steckkupplung kann ferner dann überprüft werden, wenn die Hülse eine Öffnung aufweist, welche in dem auf dem Grundkörper montierten Zustand der Hülse der Ringschulter benachbart angeordnet ist und somit die Anlage des Rohrs an der Ringschulter nach außen sichtbar werden lässt.

Um die Hülse in einfacher Weise an dem Grundkörper befestigen zu können, wird in Weiterbildung der Erfindung vorgeschlagen, dass die Hülse an ihrem von ihrem freien Ende abgewandten, anderen Ende mit wenigstens einem Eingriffselement ausgebildet ist, welches in eine zugeordnete Eingriffsvertiefung des Grundkörpers eingreift. Dabei kann die Hülse eine Mehrzahl von Eingriffselementen aufweisen, welche durch von ihrem anderen Ende ausgehende Einbuchtungen voneinander getrennt sind. Diese Einbuchtungen versehen die Eingriffselemente ferner mit einer das Einrasten ermöglichenden Elastizität.

Jede dieser Einbuchtungen kann gleichzeitig auch als die vorstehend angesprochene Öffnung dienen, welche die Überprüfung des ordnungsgemäßen und vollständigen Einschiebens des Rohrs in die Steckkupplung ermöglicht, und zwar dann, wenn wenigstens eine der Einbuchtungen eine Tiefe aufweist, die größer ist als der Abstand der Ringschulter von der Eingriffsvertiefung.

Um das Einführen des Rohrs in die Steckkupplung erleichtern zu können, kann die Hülse an ihrem freien Ende konisch erweitert sein.

Gemäß einem weiteren Aspekt der Erfindung, der von der einstückigen Ausbildung des wenigstens einen Halteelements mit der Hülse unabhängig ist und für den daher gesonderter Schutz angestrebt wird, verfügt die erfindungsgemäße Steckkupplung neben den vorstehend erläuterten Vorrichtungen zum Halten des Rohrs von dessen Außenseite her zusätzlich auch über Vorrichtungen zum Halten des Rohrs von dessen Innenseite her. Gemäß diesem weiteren Aspekt weist der Rohrstutzen wenigstens eine Ringnut auf, in welcher eine innere Haltevorrichtung anordenbar ist, wobei die innere Haltevorrichtung von einem mäander-förmigen Ring gebildet ist. Hierdurch kann der inneren Haltevorrichtung in einfacher Weise die für das Einlegen in die Ringnut erforderliche Elastizität verliehen werden.

Gemäß einer ersten Ausführungsvariante dieses weiteren Aspekts können die radial äußeren Mäanderkehren des im Wesentlichen als Ringscheibe ausgebildeten Rings mit der Ringebene einen Winkel bilden. Dabei kann der Mäanderring in der Ringnut derart angeordnet sein, dass die radial äußeren Mäanderkehren in Richtung der Ringschulter weisen und dadurch innere Halteelemente bilden.

Gemäß einer zweiten Ausführungsvariante kann der Ring aber auch im Wesentlichen als Ringhülse ausgebildet sein, wobei die im in die Ringnut eingelegten Zustand von der Ringschulter weg weisenden Mäanderkehren auf ihrer dem Rohr zugewandten Seite mit widerhakenartigen Vorsprüngen ausgebildet sind, welche zum Eingriff in das Rohr bestimmt sind. Zusätzlich oder alternativ können diese Mäanderkehren auf ihrer von dem Rohr abgewandten Seite eine sich von der Ringschulter weg erweiternde konische Fläche aufweisen, welche mit einer entsprechenden konischen Gegenfläche der Ringnut zusammenwirkt, und zwar derart, dass die innere Haltevorrichtung bei dem Versuch, das Rohr aus der Steckkupplung herauszuziehen, gegen das Rohr gedrückt wird und dieses in der Steckkupplung hält.

An dieser Stelle sei darauf hingewiesen, dass die erfindungsgemäße Steckkupplung in unterschiedlichster Kombination eingesetzt werden kann. Beispielsweise kann sie dazu verwendet werden, ein Rohr an eine übergeordnete Baueinheit anzuschließen. Ebenso ist es möglich, zwei Rohre miteinander zu verbinden, wobei die Verbindung geradlinig oder unter einem vorbestimmten Winkel, beispielsweise 90°, erfolgen kann. Auch ist die Verbindung von mehr als zwei Rohren möglich, beispielsweise mittels eines T- oder Stern-förmigen Verbindungsstücks. Zudem brauchen bei der Verbindung von zwei oder mehr Rohren nicht alle an dem Verbindungsstück ausgebildeten Kupplungen erfindungsgemäße Steckkupplungen zu sein.

Die Erfindung betrifft ferner eine Kupplungseinrichtung zum Verbinden von wenigstens zwei Rohren unter Einsatz einer entsprechenden Anzahl erfindungsgemäßer Steckkupplungen, bei welcher die Grundkörper der Steckkupplungen miteinander einstückig ausgebildet sind.

Zu sämtlichen Ausführungsformen sei noch nachgetragen, dass sie hinsichtlich der Materialien, aus denen der Grundkörper, die Hülse und die inneren Halteringe gebildet sein können, keinerlei Beschränkungen unterliegen, so dass diese Materialien insbesondere in Abstimmung auf das Material des jeweils verwendeten Rohrs gewählt werden können. Insbesondere kommen sowohl Metalle als auch Kunststoffe in Betracht. So kann der Grundkörper beispielsweise aus Messing, PPSU (Polyphenylsulfon), PSU (Polysulfon) oder PVDF (Polyvinylidenfluorid) gebildet sein, und kann die Hülse aus Edelstahl, Messing oder Aluminium gebildet sein.

Die Erfindung wird im Folgenden anhand der beigefügten Zeichnung an Ausführungsbeispielen näher erläutert werden. Es stellt dar:
- Figur 1: eine Draufsicht auf eine Kupplungsvorrichtung zur geradlinigen Verbindung zweier Rohre unter Verwendung von zwei erfin- dungsgemäßen Steckkupplungen;
- Figur 2: eine längs der Linie II-II in Figur 1 genommene Schnittansicht der Kupplungsvorrichtung gemäß Figur 1;
- Figur 3: eine perspektivische Ansicht der Hülse mit einstückig ausge- bildeter äußerer Haltevorrichtung der erfindungsgemäßen Steckkupplung;
- Figur 4: eine erste Ausführungsvariante einer inneren Haltevorrichtung der erfindungsgemäßen Steckkupplung;
- Figur 5: eine zweite Ausführungsvariante der inneren Haltevorrichtung der erfindungsgemäßen Steckkupplung;
- Figur 6: eine Schnittansicht einer zweiten Ausführungsform der erfin- dungsgemäßen Steckkupplung; und
- Figur 7: eine Seitenansicht einer dritten Ausführungsform der erfin- dungsgemäßen Steckkupplung.

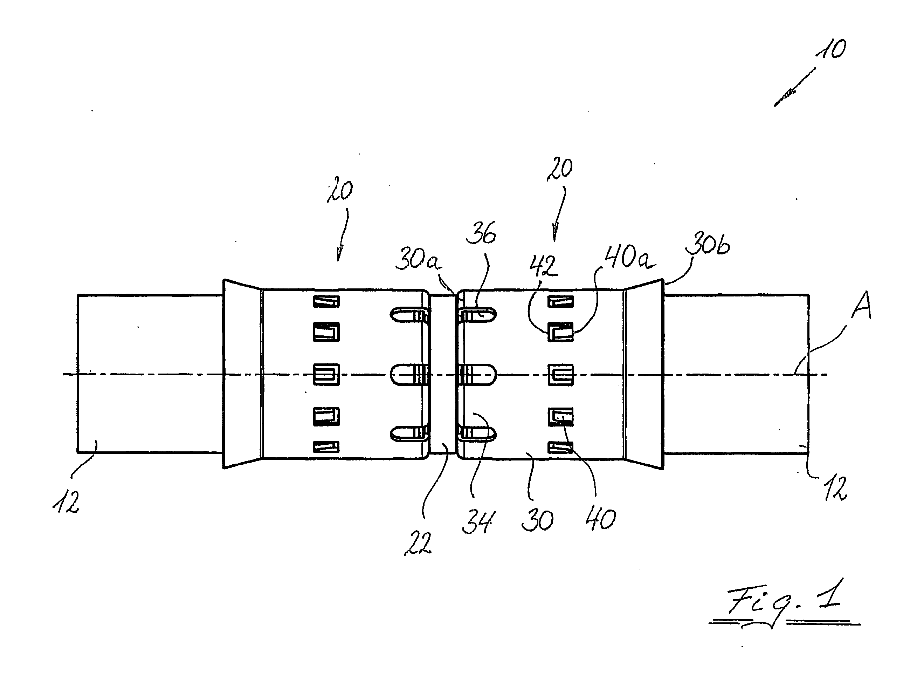

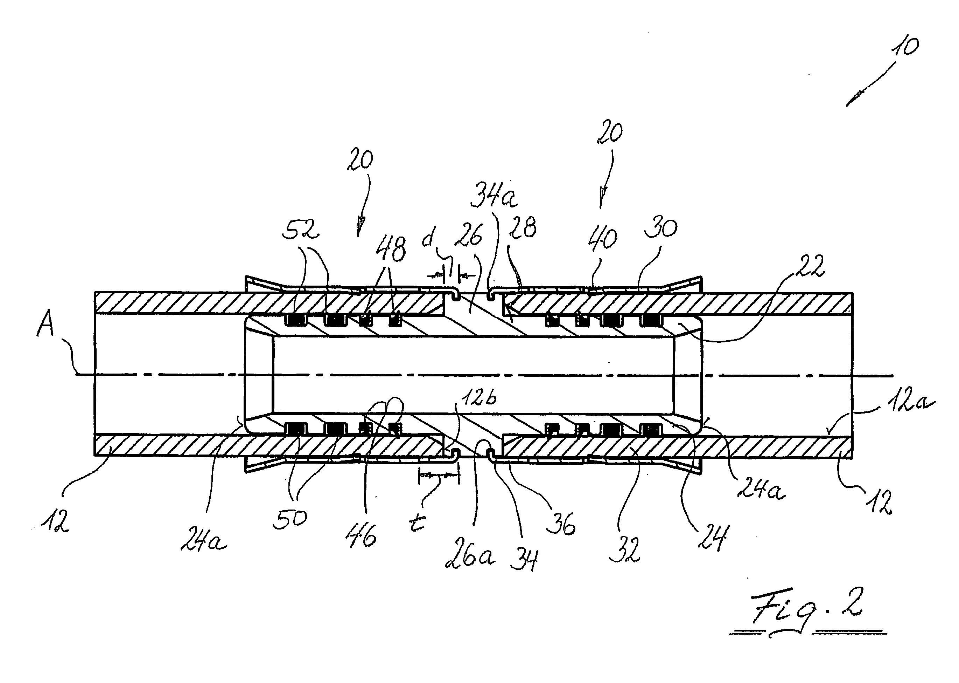

In den Figuren 1 und 2 ist eine Kupplungsvorrichtung 10 dargestellt, welche zum geradlinigen Verbinden zweier Rohre 12 dient und hierzu zwei erfindungsgemäße Steckkupplungen 20 umfasst. Da die beiden Steckkupplungen 20 identisch ausgebildet und lediglich zueinander spiegelverkehrt angeordnet sind, wird im Folgenden lediglich die in den Figuren 1 und 2 rechts dargestellte Steckkupplung 20 näher erläutert werden.

Die Steckkupplung 20 umfasst einen Grundkörper 22 mit einem Rohrstutzen 24, der in dem in den Figuren 1 und 2 dargestellten, mit dem Rohr 12 verbundenen Zustand in das Lumen 12a des Rohres 12 eingreift. Der Rohrstutzen 24 ist mit einem Basisteil 26 des Grundkörpers 22 einstückig ausgebildet, wobei am Übergang von dem Rohrstutzen 24 zu dem Basisteil 26 eine Ringschulter 28 vorgesehen ist. An dieser Ringschulter 28 liegt das Rohr 12 im ordnungsgemäß montierten Zustand mit seiner Stirnfläche an.

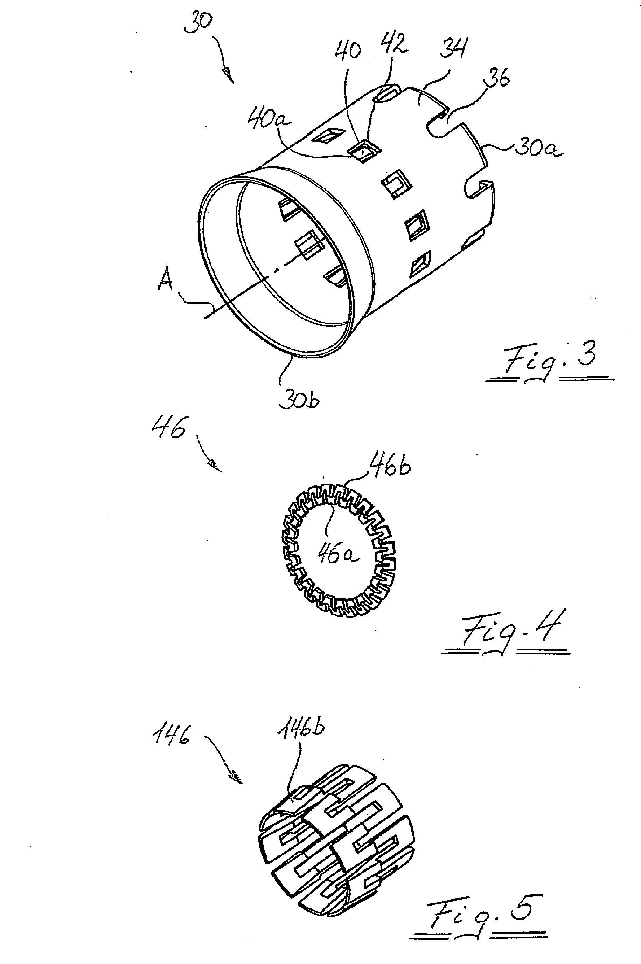

Die Steckkupplung 20 umfasst ferner eine Hülse 30 (siehe auch Figur 3), die zusammen mit dem Rohrstutzen 24 einen Aufnahmeraum 32 für das Rohr 12 umgrenzt, d.h. die Hülse 30 umgreift das Rohr 12 von außen. Zur Befestigung der Hülse 30 an dem Grundkörper 22 ist in dem Basisteil 26 eine Ringnut 26a ausgebildet, in welche Eingriffselemente 34 der Hülse 30 eingreifen. Zur Ausbildung dieser Eingriffselemente 34 sind in die Hülse 30 von ihrem inneren Längsende 30a her Einbuchtungen 36 eingebracht, welche zwischen sich die Eingriffselemente 34 als Stege ausbilden. Die Enden 34a dieser Stege sind nach innen umgebogen, um in die Ringnut 26a eingreifen zu können. Infolge der Einbuchtungen 36 verfügen die Eingriffselemente 34 über eine ausreichende Elastizität, um in bezogen auf die Längsachse A radialer Richtung so weit aufgeweitet werden zu können, dass sie auf das Basisteil 26 des Grundkörpers 22 aufgeschoben werden können, wo sie dann in die Ringnut 26a einrasten.

Erfindungsgemäß weist die Hülse 30 ferner Halteelemente 40 auf, die mit ihr einstückig ausgebildet sind. In dem dargestellten Ausführungsbeispiel sind die Halteelemente 40 von Zungen gebildet, die in Fenstern 42 der Hülse 30 angeordnet sind, wobei sie mit ihrer Basis 40a einstückig in das Material der Hülse 30 übergehen, während sie an ihrem restlichen Umfang keine Verbindung zur Hülse 30 aufweisen. Zudem ist die Basis 40a der Halteelement 40 an der dem äußeren Ende 30b der Hülse 30 zugewandten Seite der Fenster 42 angeordnet, und erstrecken sich die Halteelemente 40 von ihrer Basis 40a in Richtung des inneren Endes 30a der Hülse 30 schräg nach radial innen. Somit können die Halteelemente 40 beim Einschieben des Rohres 12 durch dieses nach radial außen ausgelenkt werden, wobei sie eine Vorspannung erfahren, die sie in die Außenumfangsfläche des Rohres 12 hineinzudrücken versucht. Dieser Widerhakeneffekt wird dann noch verstärkt, wenn man versucht, das Rohr 12 wieder aus der Aufnahme 32 herauszuziehen.

Wie man insbesondere in den Figuren 1 und 3 erkennt, sind bei der dargestellten Ausführungsform insgesamt zwölf Halteelemente 40 vorgesehen, die in Richtung der Achse A gesehen alle auf der gleichen axialen Höhe der Hülse 30 angeordnet sind, wobei grundsätzlich auch mehr oder weniger als zwölf Halteelemente vorgesehen sein können. Insbesondere sind die Halteelemente 40 über den Umfang der Hülse 30 gleichmäßig voneinander beabstandet angeordnet. Grundsätzlich ist es jedoch auch denkbar, mehrere Reihen von Halteelementen 40 vorzusehen. Dabei können die Halteelemente benachbarter Reihen an zueinander in Richtung der Achse A fluchtenden Positionen angeordnet oder aber auch relativ zueinander versetzt vorgesehen sein.

Wie man in den Figuren 1 bis 3 ferner erkennt, ist das äußere Ende 30b der Hülse 30 mit einer im Wesentlichen konischen Erweiterung ausgebildet, welche zur Erleichterung des Einführens des Rohres 12 in den Aufnahmeraum 32 dient.

Zur Unterstützung der erfindungsgemäß ausgebildeten äußeren Halteeinrichtung verfügt die Steckkupplung 20 ferner über eine innere Halteeinrichtung, die nachfolgend mit Bezug auf die in Figur 2 links dargestellte Steckkupplung 20 näher erläutert werden wird.

Die äußere Halteeinrichtung umfasst in der dargestellten Ausführungsform zwei Halteringe 46, von denen jeder in einer am Außenumfang des Rohrstutzens 24 ausgebildeten Ringnut 48 angeordnet ist. Ein derartiger Haltering 46 ist in Figur 4 vergrößert dargestellt. Erfindungsgemäß ist der Haltering 46 mäanderförmig ausgebildet, wobei sich die Mäanderschleifen im Wesentlichen in radialer Richtung erstrecken. Genauer gesagt verlaufen lediglich die inneren Mäanderkehren 46a im Wesentlichen exakt in radialer Richtung, während die äußeren Mäanderkehren 46b relativ zu den inneren Mäanderkehren 46a unter einem vorbestimmten Winkel verlaufen.

Infolge der Mäanderform verfügen die Halteringe 46 über eine ausreichende Elastizität, um aufgeweitet und über den Rohrstutzen 24 in die Ringnuten 48 eingelegt werden zu können. Dabei ist jedoch darauf zu achten, dass die äußeren Mäanderkehren 46b auf das freie Ende 24a des Rohrstutzens 24 zu weisen, so dass sie im Zusammenwirken mit dem Rohr 12 den für die Haltefunktion erforderlichen Widerhakeneffekt hervorbringen können.

Ferner erkennt man in Figur 2 zwei Dichtungselemente 50, die als O-Ring-Dichtungen ausgebildet und in zwei am Außenumfang des Rohrstutzens 24 ausgebildeten Ringnuten 52 angeordnet sind. Diese Dichtungselemente 50 sorgen im Zusammenwirken mit dem Rohrstutzen 24 und dem Rohr 12 für die gewünschte Dichtigkeit der Steckkupplung 20. Grundsätzlich kann auch nur ein Dichtungselement bzw. können auch mehr als zwei Dichtungselemente vorgesehen sein.

Nachzutragen ist noch, dass die Tiefe t der Einbuchtungen 36 größer bemessen ist als der Abstand d der Ringnut 26a von der Ringschulter 28 (siehe Figur 2). Bei ordnungsgemäß in den Aufnahmeraum 32 eingeschobenem Rohr 12 kann man daher die Anlage des Rohres 12 mit seiner Stirnfläche 12b an der Ringschulter 28 visuell überprüfen, da man das Rohr 12 innerhalb der Einbuchtungen 36 sehen kann.

Nachzutragen ist ferner, dass bei Einsatz zweier Steckkupplungen 20 zur Verbindung zweier Rohre 12 in einer Kupplungseinrichtung 10 die Grundkörper 22 der beiden Steckkupplungen 20 vorzugsweise miteinander einstückig ausgebildet sind.

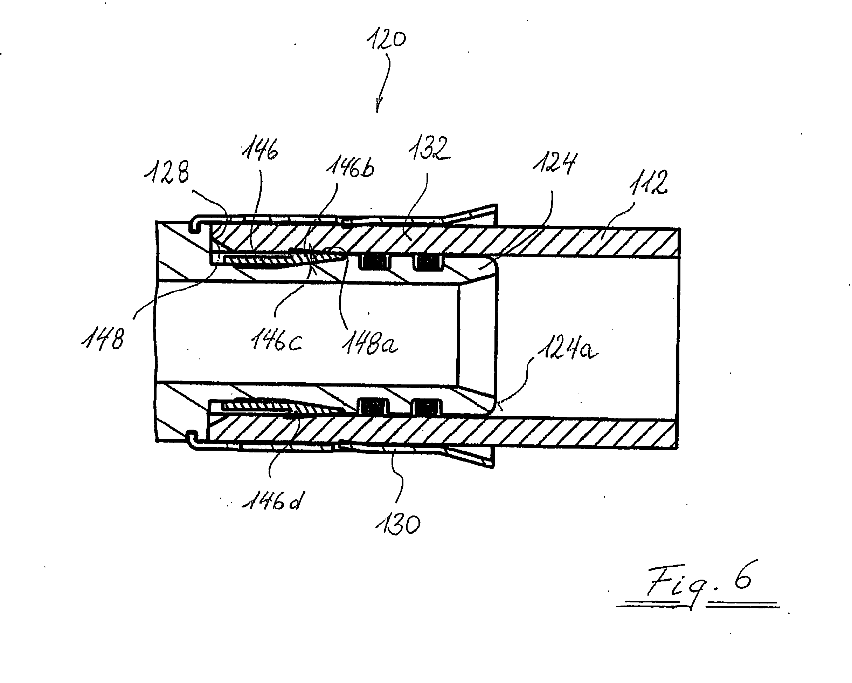

In den Figuren 5 und 6 ist eine abgewandelte Ausführungsform einer erfindungsgemäßen Steckkupplung dargestellt, die im Wesentlichen der Ausführungsform gemäß den Figuren 1 bis 4 entspricht. Daher werden im Folgenden analoge Teile mit den gleichen Bezugszeichen versehen wie in den Figuren 1 bis 4, jedoch vermehrt um die Zahl 100. Darüber hinaus wird die Steckkupplung 120 gemäß den Figuren 5 und 6 im Folgenden lediglich insoweit geschrieben werden, als sie sich von der Steckkupplung 20 gemäß den Figuren 1 bis 4 unterscheidet.

Die Steckkupplung 120 unterscheidet sich von der Steckkupplung 20 zum einen dadurch, dass lediglich ein einziger Haltering 146 vorgesehen ist, und zum anderen hinsichtlich der Ausbildung des Halterings 146 der inneren Halteeinrichtung.

Auch der Haltering 146 ist mäanderförmig ausgebildet. Im Unterschied zum Haltering 46 gemäß Figur 4 verlaufen die Mäanderschleifen jedoch in axialer und nicht in radialer Richtung. Dabei sind die äußeren Mäanderkehren 146b, d.h. in diesem Fall diejenigen Mäanderkehren, die im montierten Zustand dem freien Ende 124a des Rohrstutzens 124 zugewandt sind, mit radial äußeren Widerhakenelementen 146d versehen, die zum Eingriff mit dem Rohr 112 von radial innen her bestimmt sind (siehe Figur 6). Dieser Widerhakeneffekt wird noch dadurch verstärkt, dass die äußeren Mäanderkehren 146b an ihrer Innenseite mit einer sich zum freien Ende 124a des Rohrstutzens 124 hin erweiternden konischen Fläche 146c ausgebildet sind, welche mit einer entsprechenden konischen Gegenfläche 148a der Ringnut 148 des Rohrstutzens 124 derart zusammenwirkt, dass sich der Eingriff zwischen dem Haltering 146 und dem Rohr 112 dann verstärkt, wenn versucht wird, das Rohr 112 wieder aus dem Aufnahmeraum 132 zwischen dem Rohrstutzen 124 und der Hülse 130 herauszuziehen. Ansonsten kann auf die Beschreibung der Ausführungsform gemäß den Figuren 1 bis 4 verwiesen werden.

Abschließend sei angemerkt, dass der Einsatz zweier identisch ausgebildeter erfindungsgemäßer Steckkupplungen bei einer Verbindungsvorrichtung 10 zur geradlinigen Verbindung zweier Rohre, wie sie in den Figuren 1 und 2 dargestellt ist, lediglich als beispielhaft anzusehen ist. Die erfindungsgemäße Steckkupplung kann ebenso zum Anschluss eines Rohres an eine übergeordnete Baueinheit, beispielsweise einen Tank oder dergleichen, in Alleinstellung verwendet werden. Ferner ist es möglich, zwei erfindungsgemäße Steckkupplungen zur nicht geradlinigen Verbindung zweier Rohre einzusetzen oder auch mehr als zwei erfindungsgemäße Steckkupplungen zur Verbindung von mehr als zwei Rohren, beispielsweise bei einem T-Stück.

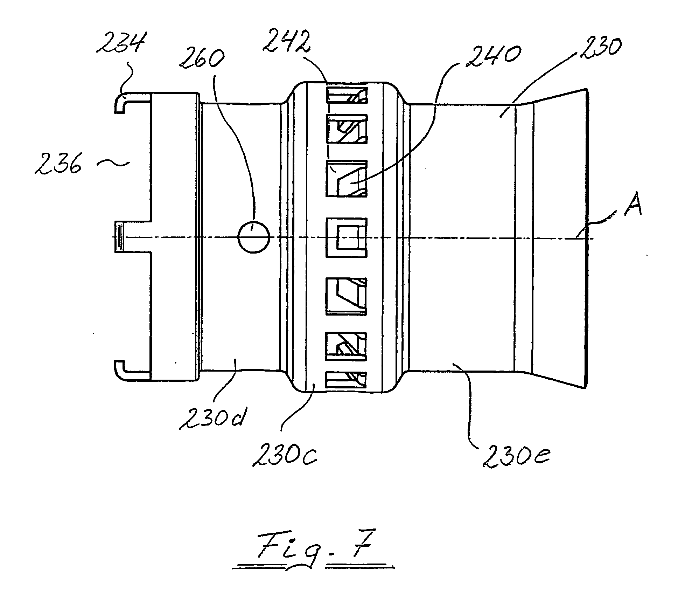

In Figur 7 ist eine weitere Ausführungsform der vorliegenden Erfindung dargestellt, welche sich von den vorstehend beschriebenen Ausführungsformen lediglich hinsichtlich der Ausbildung der äußeren Hülse der Steckkupplungen unterscheidet. In Figur 7 sind daher analoge Teile mit den gleichen Bezugszeichen versehen wie in den Figuren 1 bis 4, jedoch vermehrt um die Zahl 200, bzw. wie in den Figuren 5 und 6, jedoch vermehrt um die Zahl 100.

Darüber hinaus wird die Ausführungsform gemäß Figur 7 im Folgenden nur insoweit beschrieben, als sie sich von den vorstehenden Ausführungsformen unterscheidet, auf deren Beschreibung hiermit ansonsten ausdrücklich verwiesen sei.

Die Hülse 230 gemäß Figur 7 unterscheidet sich von den Hülsen 30 und 130 der vorstehend beschriebenen Ausführungsformen im Wesentlichen in zwei Punkten:
Zum einen sind die Halteelemente 240 nicht in einem an dem Rohr anliegenden Abschnitt der Hülse angeordnet, sondern in einem Hülsenabschnitt 230c, der einen größeren Abstand von der Hülsenachse A, beispielsweise einen größeren Radius, aufweist als die ihn umgebenden Hülsenabschnitte 230d und 230e. Infolgedessen müssen die Halteelemente 240 steiler angewinkelt sein, d.h. stärker aus ihren Fenstern 242 ausgestellt sein, oder/und länger ausgebildet sein, um mit dem Rohr in Eingriff treten zu können. Hierdurch kann die Widerstandsfähigkeit der Halteelemente 240 gegen ein Herausziehen des Rohrs aus der Hülse 230 erhöht werden.

Zum anderen dienen bei der Ausführungsform gemäß Figur 7 nicht die Einbuchtungen 236 zwischen den Eingriffselementen 234 dazu, bei ordnungsgemäß in den Aufnahmeraum eingeschobenem Rohr die Anlage des Rohres mit seiner Stirnfläche an der Ringschulter des Grundkörpers visuell überprüfen zu können. Hierzu sind in der Hülse 230 vielmehr gesonderte Öffnungen 260 vorgesehen.

## Patentansprüche

1. Steckkupplung (20) für ein Rohr (12), umfassend:
- einen Grundkörper (22)
- mit einem Rohrstutzen (24), der zum Einführen in einen Endabschnitt des Rohrs (12) bestimmt ist, und
- mit einer Ringschulter (28), welche an einem dem freien Ende (24a) des Rohrstutzens (24) abgewandten Ende des Rohrstutzens (24) vorgesehen ist und zur Anlage an einer Stirnfläche (12b) des Rohrs (12) bestimmt ist,
- eine einstückig ausgebildete Hülse (30), die zumindest teilweise um den Grundkörper (22) herum angeordnet ist und mit diesem einen Aufnahmeraum (32) bildet, in welchen das Rohr (12) einführbar ist, und
- wenigstens ein Halteelement (40), welches dazu bestimmt ist, mit einem in den Aufnahmeraum (32) eingeführten Rohr (12) von außen derart in Eingriff zu treten, dass es sich einer Bewegung des Rohrs (12) aus dem Aufnahmeraum (32) heraus widersetzt,
wobei der Rohrstutzen (24) wenigstens eine Ringnut (48) aufweist, in welcher eine innere Haltevorrichtung (46) anordenbar ist, **dadurch gekennzeichnet, dass** die innere Haltevorrichtung von wenigstens einem mäanderförmigen Ring (46) gebildet ist, und
dass eine Mehrzahl von über den Umfang der Steckkupplung (20) verteilt angeordneten Halteelementen (40) mit der Hülse (30) einstückig ausgebildet ist, wobei die Hülse (30) an ihrem von ihrem freien Ende (30b) abgewandten, anderen Ende (30a) mit einer Mehrzahl von Eingriffselementen (34) ausgebildet ist, welche in eine zugeordnete Eingriffsvertiefung (26a) des Grundkörpers (22) eingreifen und durch von ihrem anderen Ende (30a) ausgehende Einbuchtungen (36) voneinander getrennt sind.

2. Steckkupplung nach Anspruch 1,
**dadurch gekennzeichnet, dass** die radial äußeren Mäanderkehren (46b) des im Wesentlichen als Ringscheibe ausgebildeten Rings (46) mit der Ringebene (46a) einen Winkel bilden.

3. Steckkupplung nach Anspruch 1 oder 2,
**dadurch gekennzeichnet, dass** der Mäanderring (46) in der Ringnut (48) derart angeordnet ist, dass die radial äußeren Mäanderkehren (46b) in Richtung der Ringschulter (28) weisen und dadurch innere Halteelemente bilden.

4. Steckkupplung nach Anspruch 1,
**dadurch gekennzeichnet, dass** der Ring (146) im Wesentlichen als Ringhülse ausgebildet ist.

5. Steckkupplung nach Anspruch 4,
**dadurch gekennzeichnet, dass** die im in die Ringnut (148) eingelegten Zustand von der Ringschulter (128) weg weisenden Mäanderkehren (146b) auf ihrer dem Rohr (112) zugewandten Seite mit widerhakenartigen Vorsprüngen (146d) ausgebildet sind.

6. Steckkupplung nach Anspruch 4 oder 5,
**dadurch gekennzeichnet, dass** die im in die Ringnut (148) eingelegten Zustand von der Ringschulter (128) weg weisenden Mäanderkehren (146b) auf ihrer von dem Rohr (112) abgewandten Seite eine sich von der Ringschulter (128) weg erweiternde konische Fläche (146c) aufweisen, welche mit einer entsprechenden konischen Gegenfläche (148a) der Ringnut (148) zusammenwirkt.

7. Steckkupplung nach einem der Ansprüche 1 bis 6,
**dadurch gekennzeichnet, dass** wenigstens ein Teil der Mehrzahl von Halteelementen (40) auf im Wesentlichen der gleichen axialen Höhe der Hülse (30) angeordnet ist.

8. Steckkupplung nach einem der Ansprüche 1 bis 7,
**dadurch gekennzeichnet, dass** wenigstens ein Halteelement (40) in dem es umgebenden Material der Hülse (30) durch Materialverdrängung, beispielsweise durch Schneiden, Stanzen oder dergleichen, unter Belassung einer Materialverbindung an der Basis (40a) des Halteelements (40) und durch Ausstellen nach radial innen gebildet ist.

9. Steckkupplung nach einem der Ansprüche 1 bis 8,
**dadurch gekennzeichnet, dass** wenigstens ein Halteelement (240) in einem Hülsenabschnitt (230c) angeordnet ist, der einen größeren Abstand von der Hülsenachse (A), beispielsweise einen größeren Radius, aufweist als die ihn umgebenden Hülsenabschnitte (230d, 230e).

10. Steckkupplung nach einem der Ansprüche 1 bis 9,
**dadurch gekennzeichnet, dass** die Hülse (30) eine Öffnung (36) aufweist, welche in dem auf dem Grundkörper (22) montierten Zustand der Hülse (30) der Ringschulter (28) benachbart angeordnet ist.

11. Steckkupplung nach einem der Ansprüche 1 bis 10,
**dadurch gekennzeichnet, dass** wenigstens eine der Einbuchtungen (36) eine Tiefe (t) aufweist, die größer ist als der Abstand (d) der Ringschulter (28) von der Eingriffsvertiefung (26a).

12. Steckkupplung nach einem der Ansprüche 1 bis 11,
**dadurch gekennzeichnet, dass** die Hülse (30) an ihrem freien Ende (30b) konisch erweitert ist.

13. Kupplungseinrichtung (10) zum Verbinden von wenigstens zwei Rohren (12) unter Verwendung einer entsprechenden Anzahl von Steckkupplungen (20) nach einem der vorhergehenden Ansprüche, **dadurch gekennzeichnet, dass** die Grundkörper (22) der Steckkupplungen (20) miteinander einstückig ausgebildet sind.

## Claims

1. A plug-in coupling (20) for a pipe (12), comprising:
- a basic body (22)
- with a pipe connector (24) which is intended for insertion into an end portion of the pipe (12), and
- with an annular shoulder (28) which is provided at one end of the pipe connector (24) remote from the free end (24a) of the pipe connector (24) and which is intended to abut against an end face (12b) of the pipe (12),
- a one-piece sleeve (30) which is arranged at least partly around the basic body (22) and forms therewith an accommodating chamber (32) into which the pipe (12) can be inserted, and
- at least one retaining element (40) which is intended to come into engagement from the outside with a pipe (12) inserted into the accommodating chamber (32) in such a way that it opposes any movement of the pipe (12) from the accommodating chamber (32),
wherein the pipe connector (24) has at least one annular groove (48) in which an inner retaining device (46) can be disposed, **characterised in that** the inner retaining device is formed by at least one meander-shaped ring (46), and **in**
**that** a plurality of retaining elements (40) arranged spaced apart over the periphery of the plug-in coupling (20) are formed in one piece with the sleeve (30), wherein at its other end (30a) remote from its free end (30b) the sleeve (30) is formed with a plurality of engagement elements (34) which engage in an associated engagement recess (26a) of the basic body (22) and are separated from one another by indentations (36) extending from its other end (30a).

2. A plug-in coupling according to Claim 1,
**characterised in that** the radial outer meander bends (46b) of the ring (46), which is substantially in the form of an annular disc, form an angle with the ring plane (46a).

3. A plug-in coupling according to Claim 1 or 2,
**characterised in that** the meander ring (46) is so arranged in the annular groove (48) that the radially outer meander bends (46b) point in the direction of the ring shoulder (28) and thereby form inner retaining elements.

4. A plug-in coupling according to Claim 1,
**characterised in that** the ring (146) is substantially in the form of an annular sleeve.

5. A plug-in coupling according to Claim 4,
**characterised in that** the meander bends (146b) pointing away from the ring shoulder (128) in the position inserted in the annular groove (148) are formed on their side facing the pipe (112) with barb-like projections (146d).

6. A plug-in coupling according to Claim 4 or 5,
**characterised in that** the meander bends (146b) pointing away from the ring shoulder (128) in the position inserted in the annular groove (148) have on their side facing away from the pipe (112) a conical surface (146c) which widens away from the ring shoulder (128) and which co-operates with corresponding conical mating surfaces (148a) of the annular groove (148).

7. A plug-in coupling according to any one of Claims 1 to 6,
**characterised in that** at least some of the plurality of retaining elements (40) are arranged at substantially the same axial level on the sleeve (30).

8. A plug-in coupling according to any one of Claims 1 to 7,
**characterised in that** at least one retaining element (40) is formed in the material of the sleeve (30) surrounding it by material displacement, for example by cutting, punching or the like, leaving a material connection at the base (40a) of the retaining element (40), and by opening radially inwards.

9. A plug-in coupling according to any one of Claims 1 to 8,
**characterised in that** at least one retaining element (240) is disposed in a sleeve portion (230c) which has at a greater distance from the sleeve axis (A), for example a greater radius, than the sleeve portions (230d,230e) surrounding it.

10. A plug-in coupling according to any one of Claims 1 to 9,
**characterised in that** the sleeve (30) has an opening (36) which in the position of the sleeve (30) mounted on the basic body (22) is arranged adjacent the ring shoulder (28).

11. A plug-in coupling according to any one of Claims 1 to 10,
**characterised in that** at least one of the indentations (36) has a depth (t) which is greater than the distance (d) of the ring shoulder (28) from the engagement recess (26a).

12. A plug-in coupling according to any one of Claims 1 to 11,
**characterised in that** the sleeve (30) is conically widened at its free end (30b).

13. A coupling device (10) for connecting at least two pipes using a corresponding number of plug-in couplings (20) according to any one of the preceding Claims,
**characterised in that** the basic bodies (22) of the plug-in couplings (20) are formed in one piece with one another.

## Revendications

1. Raccord enfichable (20) pour un tuyau (12), comprenant:
- un corps de base (22)
- avec un embout tubulaire (24), qui est destiné à être introduit dans une section d'extrémité du tuyau (12), et
- avec un épaulement annulaire (28), qui est prévu à une extrémité de l'embout tubulaire (24) éloignée de l'extrémité libre (24a) de l'embout tubulaire (24) et qui est destiné à s'appuyer sur une face frontale (12b) du tuyau (12),
- une douille (30) réalisée d'une seule pièce, qui est disposée au moins partiellement autour du corps de base (22) et qui forme avec celui-ci une chambre de réception (32), dans laquelle le tuyau (12) peut être introduit, et
- au moins un élément de retenue (40), qui est destiné à venir en prise par l'extérieur avec un tuyau (12) introduit dans la chambre de réception (32), de telle manière qu'il s'oppose à un mouvement du tuyau (12) hors de la chambre de réception (32),
dans lequel l'embout tubulaire (24) présente au moins une rainure annulaire (48), dans laquelle un dispositif de retenue intérieur (46) peut être disposé,
**caractérisé en ce que** le dispositif de retenue intérieur est formé par au moins un anneau méandreux (46), et **en ce qu'**une pluralité d'éléments de retenue (40) disposés de façon répartie sur la périphérie du raccord enfichable (20) sont formés d'une seule pièce avec la douille (30), dans lequel la douille (30) est formée, à son autre extrémité (30a) éloignée de son extrémité libre (30b), avec une pluralité d'éléments de prise (34), qui s'engagent dans un creux de prise associé (26a) du corps de base (22) et qui sont séparés l'un de l'autre par des évidements (36) partant de leur autre extrémité (30a).

2. Raccord enfichable selon la revendication 1, **caractérisé en ce que** les courbes de méandre radialement extérieures (46b) de l'anneau (46) réalisé essentiellement en forme de disque annulaire forment un angle avec le plan de l'anneau (46a).

3. Raccord enfichable selon la revendication 1 ou 2, **caractérisé en ce que** l'anneau méandreux (46) est disposé dans la rainure annulaire (48), de telle manière que les courbes de méandre radialement extérieures (46b) soient orientées en direction de l'épaulement annulaire (28) et forment ainsi des éléments de retenue intérieurs.

4. Raccord enfichable selon la revendication 1, **caractérisé en ce que** l'anneau (146) est réalisé essentiellement en forme de douille annulaire.

5. Raccord enfichable selon la revendication 4, **caractérisé en ce que** les courbes de méandre (146b) orientées à l'opposé de l'épaulement annulaire (128) dans leur état introduit dans la rainure annulaire (148) sont réalisées, sur leur côté tourné vers le tuyau (112), avec des saillies (146d) en forme d'ardillons.

6. Raccord enfichable selon la revendication 4 ou 5, **caractérisé en ce que** les courbes de méandre (146b) orientées à l'opposé de l'épaulement annulaire (128) dans leur état introduit dans la rainure annulaire (148) présentent, sur leur côté éloigné du tuyau (112), une face conique (146c) s'évasant en s'éloignant de l'épaulement annulaire (128), qui coopère avec une face conique opposée correspondante (148a) de la rainure annulaire (148).

7. Raccord enfichable selon l'une quelconque des revendications 1 à 6, **caractérisé en ce qu'**au moins une partie de la pluralité d'éléments de retenue (40) sont disposés à une hauteur axiale essentiellement égale de la douille (30).

8. Raccord enfichable selon l'une quelconque des revendications 1 à 7, **caractérisé en ce qu'**au moins un élément de retenue (40) est formé dans la matière de la douille (30) qui l'entoure par un déplacement de matière, par exemple par découpage, estampage ou analogue, en laissant une liaison matérielle avec la base (40a) de l'élément de retenue (40) et par repoussage radialement vers l'intérieur.

9. Raccord enfichable selon l'une quelconque des revendications 1 à 8, **caractérisé en ce qu'**au moins un élément de retenue (240) est disposé dans une section de douille (230c), qui présente une plus grande distance par rapport à l'axe de douille (A), par exemple un plus grand rayon, que les sections de douille (230d, 230e) qui l'entourent.

10. Raccord enfichable selon l'une quelconque des revendications 1 à 9, **caractérisé en ce que** la douille (30) présente une ouverture (36) qui, à l'état monté de la douille (30) sur le corps de base (22), est disposée à proximité de l'épaulement annulaire (28).

11. Raccord enfichable selon l'une quelconque des revendications 1 à 10, **caractérisé en ce qu'**au moins un des évidements (36) présente une profondeur (t), qui est plus grande que la distance (d) de l'épaulement annulaire (28) au creux d'accrochage (26a).

12. Raccord enfichable selon l'une quelconque des revendications 1 à 11, **caractérisé en ce que** la douille (30) est évasée en cône à ses extrémités libres (30b).

13. Dispositif de couplage (10) pour le raccordement d'au moins deux tuyaux (12) en utilisant un nombre correspondant de raccords enfichables (20) selon l'une quelconque des revendications précédentes, **caractérisé en ce que** les corps de base (22) des raccords enfichables (20) sont formés d'une seule pièce les uns avec les autres.
